(19) Europäisches Patentamt / European Patent Office / Office européen des brevets

(11) **EP 1 631 999 B1**

(12) **EUROPEAN PATENT SPECIFICATION**

(45) Date of publication and mention of the grant of the patent:
**25.04.2012 Bulletin 2012/17**

(21) Application number: **04776134.1**

(22) Date of filing: **27.05.2004**

(51) Int Cl.:
*B01J 37/02* (2006.01)    *H01M 4/86* (2006.01)
*H01M 4/90* (2006.01)    *H01M 8/10* (2006.01)

(86) International application number:
**PCT/US2004/016707**

(87) International publication number:
**WO 2005/001978 (06.01.2005 Gazette 2005/01)**

(54) **FUEL CELLS AND THEIR COMPONENTS USING CATALYSTS HAVING A HIGH METAL TO SUPPORT RATIO**

BRENNSTOFFZELLEN UND IHRE KOMPONENTEN, WELCHE KATALYSATOREN MIT HOHEM VERHÄLTNIS ZWISCHEN METALL UND TRÄGER AUFWEISEN

PILES A COMBUSTIBLE ET LEURS COMPOSANTS FAISANT APPEL A DES CATALYSEURS PRESENTANT UN RAPPORT METAL SUR SUPPORT ELEVE

(84) Designated Contracting States:
**DE FR GB**

(30) Priority: **30.05.2003 US 475075 P**

(43) Date of publication of application:
**08.03.2006 Bulletin 2006/10**

(73) Proprietor: **E.I. DU PONT DE NEMOURS AND COMPANY**
**Wilmington, DE 19898 (US)**

(72) Inventor: **KOURTAKIS, Kostantinos**
**Media, PA 19063 (US)**

(74) Representative: **Hirsch & Associés**
**58, avenue Marceau**
**75008 Paris (FR)**

(56) References cited:
WO-A-92/16027    WO-A-94/24710
WO-A-99/13128    WO-A-99/42213
US-A1- 2003 059 666

- **GOTZ M ET AL: "Binary and ternary anode catalyst formulations including the elements W, Sn and Mo for PEMFCs operated on methanol or reformate gas" ELECTROCHIMICA ACTA, ELSEVIER SCIENCE PUBLISHERS, BARKING, GB, vol. 43, no. 24, 21 August 1998 (1998-08-21), pages 3637-3644, XP004132402 ISSN: 0013-4686**
- **WATANABE M ET AL: "PREPARATION OF HIGHLY DISPERSED PT+RU ALLOY CLUSTERS AND THE ACTIVITY FOR THE ELECTROOXIDATION OF METHANOL" JOURNAL OF ELECTROANALYTICAL CHEMISTRY AND INTERFACIAL ELECTROCHEMISTRY, ELSEVIER, AMSTERDAM, NL, vol. 229, 1987, pages 395-406, XP001038606 ISSN: 0022-0728 cited in the application**
- **GASTEIGER H A ET AL: "CO ELECTROOXIDATION ON WELL-CHARACTERIZED PT-RU ALLOYS" JOURNAL OF PHYSICAL CHEMISTRY, AMERICAN CHEMICAL SOCIETY, US, vol. 98, 1994, pages 617-625, XP009011471 ISSN: 0022-3654 cited in the application**

**Description**

FIELD OF THE INVENTION

The present invention relates to fuel cells, membrane electrode assemblies and coated substrates, comprising electrocatalysts containing a high metal support ratio.

BACKGROUND

Electrochemical cells generally include an anode electrode and a cathode electrode separated by an electrolyte. A well-known use of electrochemical cells is in a stack for a fuel cell (a cell that converts fuel and oxidants to electrical energy) that uses a proton exchange membrane (hereafter "PEM") as the electrolyte. In such a fuel cell, a reactant or reducing gas such as hydrogen is supplied to the anode electrode, and an oxidant such as oxygen or air is supplied to the cathode electrode. The hydrogen electrochemically reacts at a surface of the anode electrode to produce hydrogen ions and electrons. The electrons are conducted to an external load circuit and then returned to the cathode electrode, while hydrogen ions transfer through the electrolyte to the cathode electrode, where they react with the oxidant and electrons to produce water and release thermal energy.

Fuel cells are typically formed as stacks or assemblages of membrane electrode assemblies (MEA), and preferably include a coated substrate, an anode and cathode, and other optional components. The fuel cells typically also comprise a porous, electrically conductive sheet material that is in electrical contact with each of the electrodes, and permits diffusion of the reactants to the electrodes. The coated substrate can be, for example, an electrocatalyst coated membrane (CCM) or an electro catalyst coated onto a gas diffusion backing to create a gas diffusion electrode (GDE), wherein the coated substrate is coated with an electrocatalyst coating composition.

The most efficient fuel cells use pure hydrogen as the fuel and oxygen as the oxidant. However, the use of pure hydrogen has known disadvantages, including relatively high cost and storage considerations. Consequently, attempts have been made to operate fuel cells using fuels other than pure hydrogen.

In an organic/air fuel cell, an organic fuel such as methanol, ethanol, formaldehyde, or formic acid is oxidized to carbon dioxide at an anode, while air or oxygen is reduced to water at a cathode. Fuel cells employing organic fuels are extremely attractive for both stationary and portable applications, in part, because of the high specific energy of the organic fuels, e.g., the specific energy of methanol is 6232-watt hours per kilogram (Wh/kg). One such fuel cell is a "direct oxidation" fuel cell in which the organic fuel is directly fed into the anode, where the fuel is oxidized. Thus, the need for a reformer to convert the organic fuel into a hydrogen rich fuel gas is avoided resulting in considerable weight and volume savings for the fuel cell system. A direct methanol fuel cell is one such fuel cell system.

Materials customarily used as anode electrocatalysts are pure metals or simple alloys (e.g., Pt, Pt/Ru, Pt-Ir) supported on high surface area carbon. For example, the state-of-the-art anode catalysts for hydrocarbon (e.g., direct methanol) fuel cells are based on platinum (Pt)-ruthenium (Ru) alloys. Heretofore, the best-known catalyst was $Pt_{50}$/$Ru_{50}$ (numbers in subscript indicate atomic ratios). Gasteiger et al., J Phys. Chem., 98:617, 1994; Watanabe et al., J. Electroanal. Chem., 229-395, 1987.

The use of unsupported catalyst (wherein no support is included in the catalyst composition) in certain applications is not desired because it can substantially increase the cost of the membrane electrode assembly; more of the expensive noble metal is required to achieve the desired electrochemcial performance (in many cases, an unsupported catalyst, such as platinum, contains a lower intrinsic surface area when compared with the supported noble metal catalyst, and a lower intrinsic reactivity). This is particularly important for direct methanol fuel cell applications, where relatively large amounts of noble metal are needed for both the anode and cathode due to sluggish methanol oxidation kinetics and methanol cross-over to the cathode.

Noble metal electrocatalysts containing platinum are widely used in the art for fuel cell applications. Binary catalysts, e.g., of ruthenium and platinum, have been reported to have synergistic effects in some reactions. For example, a specific activity factor of 10 higher than for pure platinum has been reported for a platinum-ruthenium catalyst. Watanabe et al., "Preparation of Highly Dispersed Pt + Ru Alloy Clusters and the Activity for the Electrooxidation of Methanol", J. Electroanal. Chem., 229, pp. 395-406 (1987). Watanabe et al., disclose a method for producing a platinum/ruthenium catalyst.

US 2003/0059666 discloses a fuel cell comprising a coated substrate, wherein the coated substrate comprises a substrate having coated an electrocatalyst coating composition, wherein the electrocatalyst coating composition comprises an anode electrocatalyst comprising:

(a) a compound selected from the group consisting of tungsten carbide, molybdenum carbide, tungsten oxycarbide, molybdenum oxycarbide, and mixtures thereof;
(b) platinum, mixtures of platinum and ruthenium, or mixtures of platinum and ruthenium oxide; and

(c) a metal selected from the group consisting of V, Nb, Ta, Cr, Mn, Fe, Re, Co, Ni, Cu, and mixtures thereof.

WO 99/42213 discloses a catalyst comprised of a support body comprised of a transition metal based electrically conductive ceramic, and at least one noble metal supported on the support body.

The article "Binary and ternary anode catalyst formulations including the elements W, Sn and Mo for PEMFCs operated on methanol or reformate gas", in Electrochimica Acta, Vol.43, N°24, pp.3637-3644, 1998 discloses binary and ternary carbon supported catalysts with the elements Pt and Ru, W, Mo or Sn.

The article "Preparation of highly dispersed Pt+Ru alloy clusters and the activity for the electrooxidation of methanol" in J.Electroanal. Chem., 229 (1987) 395-406 discloses the preparation of Pt+Ru binary catalysts wherein Pt and Ru are deposited on carbon black.

The article "CO Electrooxidation on well-characterized Pt-Ru alloys" in J. Phys. chem. 1994, 98, 617-625 discusses the electrocatalytic activity of well-characterized Pt-Ru alloy electrodes toward the electrooxidation of CO in acidic electrolyte at room temperature.

WO94/24710 discloses an electrocatalyst material for use in an acid electrolyte environment, comprising platinum alloyed with at least one alloying element and gold which is unalloyed with the platinum, supported on a conductive support, the atomic ratio of platinum to the alloying element being in the range 80:20 to 20:80, and wherein the gold is present in a loading of 0.0001 up to but not including 3wt % of the total catalyst weight.

WO92/16027 discloses a material having enhanced electrochromic and electrocatalytic activity prepared by electrodeposition, onto a cathodic substrate, of material from a solution comprising ions of at least one metal (A) capable of forming a hydrogen bronze, especially tungsten, molybdenum or vanadium, and ions of at least one metal (B) from Group VIII of the periodic table, especially nickel, cobalt, palladium, platinum, iron or ruthenium, or by reductive co-deposition from such a solution. The material may be used as an electrocatalyst in the electrochemical oxidation of organic compounds, especially alcohols such as methanol and ethanol, and more especially in alcohol fuel cells, in which reduced acid concentration and increased alcohol concentration may be used.

WO99/13128 discloses a process for depositing a minimal load of an electrocatalyst, preferably comprising platinum, onto a support, preferably a support capable of use as a fuel cell electrode (most preferably carbon cloth), while maximizing the catalytic activity of the catalyst.

SUMMARY OF THE INVENTION

One aspect of the present invention is a coated substrate comprising:

(a) a substrate; and
(b) an electrocatalyst applied to the substrate, wherein the electrocatalyst comprises an anode or cathode electrocatalyst comprising a support and a metal, wherein the total amount of metal in the electrocatalyst is at least 70 weight percent of the electrocatalyst.

In some embodiments, the substrate is an ion exchange membrane. In some embodiments, the substrate is a gas diffusion backing.

A further aspect of the present invention is a membrane electrode assembly comprising a coated substrate comprising:

(a) a substrate; and
(c) an electrocatalyst applied to the substrate, wherein the electrocatalyst comprises an anode or cathode electrocatalyst comprising a support and a metal, wherein the total amount of metal in the electrocatalyst is at least 70 weight percent of the electrocatalyst.

Another aspect of the present invention is a membrane electrode assembly comprising the coated substrate.

These and other aspects will be apparent to those skilled in the art in view of the present disclosures and the appended claims.

BRIEF DESCRIPTION OF THE DRAWING

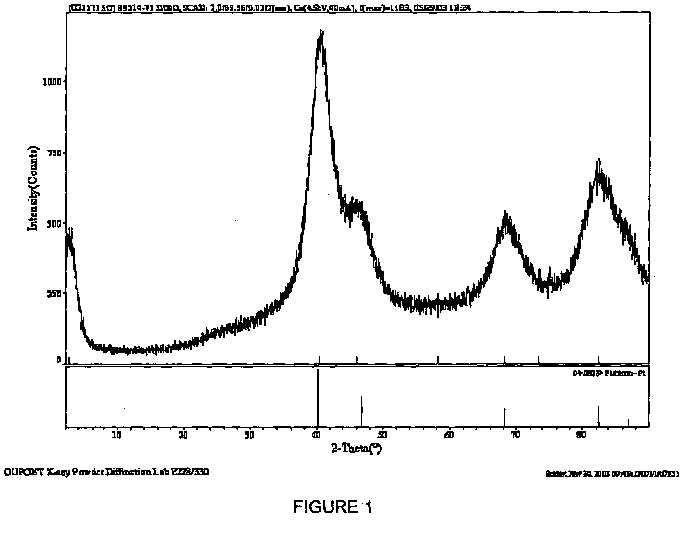

Figure 1 is an X-ray diffraction graph of one embodiment of the present invention.

DETAILED DESCRIPTION

The present invention provides coated substrates, ion exchange membranes, and fuel cells, which include a substrate and an electrocatalyst comprising at least 70 weight percent metal.

The coated substrates disclosed herein can be used in conjunction with a variety of fuel cells, including, for example, direct methanol fuel cells, hydrogen fuel cells, reformed hydrogen fuel cells (containing $H_2$/CO mixtures), as well as other liquid feed fuel cells (e.g. those utilizing feed fuels such as ethanol, propanol, and formic acid).

Fuel cells containing the coated substrates exhibit improved performance in comparison to conventional fuel cells. While it is not intended that the present invention be limited to any particular theory, it is believed that the high metal support electrocatalyst compositions can lead to thinner electrodes with improved mass transport properties. If the amount of support in the electrocatalyst is minimized, the electrode thickness can be reduced, while the electrocatalyst can also maintain a high dispersion of small metal particles on the support.

Mass transport in fuel cell anodes and cathodes can clearly play a role in fuel cell performance. Mass transport limitations can limit the overall performance of the fuel cell. While not being bound by theory, it is believed that with respect to the present invention, (decreasing mass transport limitations) increasing mass transport by decreasing the electrode layer thickness improves performance (e.g., by increasing supply of fuel on the anode or the cathode electrode layers, the removal of reaction product, or improved proton migration). For instance, see J. Ihonen, G. Lindbergh, A. Lundblad and G. Sundholm, Journal of the Electrochemical Society, 149, (4), A448-A454, 2002,).

The present invention provides coated substrates, fuel cells, membrane electrode assemblies and fuel cell stacks comprising supported metal electrocatalysts, wherein the electrocatalyst comprises at least 70 weight percent of metal, preferably about 70-90 weight percent of metal.

A substrate for coating in accordance with the present invention is an ion exchange membrane or a gas diffusion backing, which can have an electrocatalyst coated thereon, thereby forming a CCM or GDE respectively. Typically, the electrocatalyst comprises an anode or cathode electrocatalyst, a binder such as an ion exchange polymer, and a solvent.

A variety of techniques are known for CCM manufacture. Typical manufacturing techniques involve the application of an electrocatalyst coating composition onto a substrate such as an ion exchange polymer membrane. Methods for applying the electrocatalyst onto the substrate include spraying, painting, patch coating and screen printing or flexographic printing.

The ion exchange membrane for use in preparing a catalyst-coated membrane (CCM) can be a membrane of the same ion exchange polymers herein for use in the electrocatalyst coating compositions. The membranes can be made by known extrusion or casting techniques and have thicknesses that can vary depending upon the intended application. The membranes typically have a thickness of 350 μm or less, although recently membranes that are quite thin, i.e., 50 μm or less, are being employed for certain fuel cell applications. While the polymer can be in alkali metal or ammonium salt form, it is typical for the polymer in the membrane to be in acid form to avoid post treatment acid exchange steps. Suitable perfluorinated sulfonic acid polymer membranes in acid form are available under the trademark Nafion® by E.I. du Pont de Nemours and Company.

Reinforced perfluorinated ion exchange polymer membranes can also be utilized in CCM manufacture. Reinforced membranes can be made by impregnating porous, expanded PTFE (ePTFE) with ion exchange polymer. ePTFE is available under the trade name "Goretex" from W. L. Gore and Associates, Inc., Elkton, MD, and under the trade name "Tetratex" from Tetratec, Feasterville, PA. Impregnation of ePTFE with perfluorinated sulfonic acid polymer is disclosed in U.S. Patents 5,547,551 and 6,110,333.

Alternately, the ion exchange membrane can be a porous substrate. A porous substrate may improve mechanical properties for some applications and/or decrease costs. The porous substrate can be made from a wide range of components, including, for example, hydrocarbons, polyolefins such polyethylene, polypropylene, polybutylene, and copolymers including polyolefins. Perhalogenated polymers such as polychlorotrifluoroethylene can also be used. The membrane substrate can also be made from a polybenzimadazole polymer, for example, by casting a solution of polybenzimadazole in phosphoric acid ($H_3PO_4$) doped with trifluoroacetic acid (TFA) as described in U.S. Patent Nos. 5,525,436, 5,716,727, 6,025,085 and 6,099,988.

Since the ion exchange polymer employed in the electrocatalyst coating composition serves not only as binder for the electrocatalyst particles but also assists in securing the electrode to the membrane, it is preferred that the ion exchange polymers in the composition be compatible with the ion exchange polymer in the membrane. Most typically, ion exchange polymers in the composition are the same type as the ion exchange polymer in the membrane.

Ion exchange polymers suitable for use in making coated substrates according to the present invention include those polymers known for use in various types of fuel cells including, for example, highly fluorinated ion-exchange polymers. "Highly fluorinated" means that at least 90% of the total number of univalent atoms in the polymer are fluorine atoms. Most typically, the polymer is perfluorinated. It is typical for polymers used in fuel cells to have sulfonate ion exchange groups. The term "sulfonate ion exchange groups" as used herein means either sulfonic acid groups or salts of sulfonic acid groups, typically alkali metal or ammonium salts. For applications where the polymer is to be used for proton exchange such as in fuel cells, the sulfonic acid form of the polymer is typical. If the polymer in the electrocatalyst coating composition is not in sulfonic acid form when used, a post treatment acid exchange step can be used to convert the polymer to acid form prior to use. It is also possible to apply an electrocatalyst coating composition not in sulfonic acid form to an intermediate film material where it is post treated and acid exchanged with subsequent transfer to the fuel cell. Alternatively, if the polymer in the electrocatalyst coating composition is in the sulfonic acid form then hydrolysis is not necessary.

The ion exchange polymer employed comprises a polymer backbone with recurring side chains attached to the backbone with the side chains carrying the ion exchange groups. Homopolymers or copolymers can be used. Copolymers are typically formed from one monomer that is a nonfunctional monomer and that provides atoms for the polymer backbone, and a second monomer that provides atoms for the polymer backbone and also contributes a side chain carrying a cation exchange group or its precursor, e.g., a sulfonyl halide group such a sulfonyl fluoride ($-SO_2F$), which can be subsequently hydrolyzed to a sulfonate ion exchange group. For example, copolymers of a first fluorinated vinyl monomer together with a second fluorinated vinyl monomer having a sulfonyl fluoride group ($-SO_2F$) can be used. Exemplary first fluorinated vinyl monomers include tetrafluoroethylene (TFE), hexafluoropropylene, vinyl fluoride, vinylidine fluoride, trifluoroethylene, chlorotrifluoroethylene, perfluoro (alkyl vinyl ether), and mixtures of two or more thereof. Exemplary second monomers include fluorinated vinyl ethers with sulfonate ion exchange groups or precursor groups that can provide the desired side chain in the polymer. The first monomer can also have a side chain that does not interfere with the ion exchange function of the sulfonate ion exchange group. Additional monomers can also be incorporated into the polymers if desired.

Typical polymers for use in making coated substrates include polymers having a highly fluorinated, most typically a perfluorinated, carbon backbone with a side chain represented by the formula $-(O-CF_2CFR_f)_a-O-CF_2CFR'_fSO_3H$, wherein $R_f$ and $R'_f$ are independently selected from F, Cl and perfluorinated alkyl groups having 1 to 10 carbon atoms, wherein $a = 0$, 1 or 2. Specific examples of suitable polymers include those disclosed in U.S. Patents 3,282,875; 4,358,545; and 4,940,525. One exemplary polymer comprises a perfluorocarbon backbone and a side chain represented by the formula $-O-CF_2CF(CF_3)-O-CF_2CF_2SO_3H$. Such polymers are disclosed in U.S. Patent 3,282,875 and can be made by copolymerization of tetrafluoroethylene (TFE) and the perfluorinated vinyl ether $CF_2=CF-O-CF_2CF(CF_3)-O-CF_2CF_2SO_2F$, perfluoro(3,6-dioxa-4-methyl-7-octenesulfonyl fluoride) (PDMOF), followed by conversion to sulfonate groups by hydrolysis of the sulfonyl fluoride groups and ion exchanging to convert to the acid, also known as the proton form. An exemplary polymer of the type disclosed in U.S. Patents 4,358,545 and 4,940,525 has a side chain $-O-CF_2CF_2SO_3H$. The polymer can be made by copolymerization of tetrafluoroethylene (TFE) and the perfluorinated vinyl ether $CF_2=CF-O-CF_2CF_2SO_2F$, perfluoro(3-oxa-4-pentenesulfonyl fluoride) (POPF), followed by hydrolysis and acid exchange.

For perfluorinated polymers of the type described hereinabove, the ion exchange capacity of a polymer can be expressed in terms of ion exchange ratio ("IXR"). Ion exchange ratio is the number of carbon atoms in the polymer backbone in relation to the ion exchange groups. A wide range of IXR values for the polymer are possible. Typically, however, the IXR range for perfluorinated sulfonate polymers is from about 7 to about 33. For perfluorinated polymers of the type described hereinabove, the cation exchange capacity of a polymer can be expressed in terms of equivalent weight (EW). Equivalent weight (EW), as used herein, is the weight of the polymer in acid form required to neutralize one equivalent of NaOH. For a sulfonate polymer having a perfluorocarbon backbone and a side chain $-O-CF_2-CF(CF_3)-O-CF_2-CF_2-SO_3H$ (or a salt thereof), the equivalent weight range corresponding to an IXR of about 7 to about 33 is about 700 EW to about 2000 EW. A preferred range for IXR for such a polymer is from about 8 to about 23 (750 to 1500 EW), and a more preferred range is from about 9 to about 15 (800 to 1100 EW).

The gas diffusion backing comprises a porous, conductive sheet material such as paper or cloth, made from a woven or non-woven carbon fiber, that can optionally be treated to exhibit hydrophilic or hydrophobic behavior, and coated on one or both surfaces with a gas diffusion layer, typically comprising a film of particles and a binder, for example, fluoropolymers such as PTFE. The electrocatalyst coating composition is coated onto the gas diffusion backing. The electrocatalyst coating composition can be coated on to the gas diffusion layer. The electrocatalyst coating composition that forms the anode or cathode is the same as that described hereinabove for use in making the catalyst coated membrane.

Gas diffusion backings for use in accordance with the present invention as well as the methods for making the gas diffusion backings are those conventional gas diffusion backings and methods known to those skilled in the art. Suitable gas diffusion backings are commercially available, including for example, Zoltek® carbon cloth (available from Zoltek Companies, St. Louis MO) and ELAT® (available from E-TEK Incorporated, Natick MA).

The electrocatalyst coating composition comprises an anode or cathode electrocatalyst comprising a support; and a metal, wherein the metal is at least about 70 weight percent of the electrocatalyst, preferably about 70 to about 90 weight percent of the electrocatalyst.

Electrocatalysts disclosed herein are useful in membrane electrode assemblies, fuel cells and, in particular, as supported electrocatalysts for fuel cells, for example, as anode or cathode electrocatalysts for direct methanol fuel cells or hydrogen fuel cells. The electrocatalysts are useful in any oxidation or reduction reaction in a fuel cell. Moreover, in general, the electrocatalysts can be made according to those methods known to those skilled in the art. For example, the supported catalysts can be made by a colloidal oxide method (Watanabe et al., J. Electroanal. Chem., 229-395, 1987) in which platinum sulfite acid and other oxidizable precursors (e.g., $RuCl_3$) are reacted with hydrogen peroxide to create the colloidal oxide particles to create deposited electrocatalysts. Other known methods, such as impregnation followed by chemical reduction or reduction with gas phase hydrogen, can also be used.

The support can be any conventional support. Preferably, the support comprises at least one of polyaniline or polypyrrole, silica, zirconia, particulate carbon, conducting polymers, transition metal carbide, metal carbide composites, metal oxides, metal oxide bronze, alumina and zeolite and combinations thereof. "Combinations thereof", as used herein in connection with the recitation of two or more items, is intended to include any combination of two or more items recited. More preferably, the support is particulate carbon.

Preferred carbon supports (prior to any optional treatment) are turbostratic or graphitic carbons of varying surface areas such as Cabot Corporation's Vulcan® XC72R, Akzo Noble Ketjen® 600 or 300, Vulcan® Black Pearls (Cabot Corporation), acetylene black (Denki Kagku Kogyo Kabushiki Kaisha), as well as other conducting carbon varieties. Other carbons include acetylene black and other graphite powders, single or multiwalled carbon nanotubes, fibers and other carbon structures (e.g., fullerenes, nanohorns).

In one preferred embodiment using a carbon support, the oxygen content of the carbon support contained in the electrocatalyst is less than about 5 weight percent of the carbon support, preferably from about 3 to 4 weight percent of the carbon support, and more preferably from about 2.45 to about 2.65 weight percent.

The X-ray diffraction pattern (Figure 1) of a platinum/ruthenium and carbon catalyst shows a low crystallinity material with broad diffraction peaks corresponding to a cubic, platinum containing alloy phase or phases. Powder X-ray diffraction data can obtained using an automated powder diffractometer (for example, Philips X'PERT Model 3040), and samples can be run in a batch mode with a sample changer (for example, Model PW 1775 multi-position sample changer). The diffractometer may be equipped with an automatic variable slit, sample spinner, xenon proportional counter, and a graphite monochromator. The radiation can be CuK(alpha) (45 kV, 40mA), wherein the data are collected at room temperature from about 2 to about 60 degree 2-theta; a continuous scan with an equivalent step size of 0.03 degree; and a count time of 0.5 seconds per step. The samples can be prepared as a thin layer of powdered material.

Suitable metals for use in making the coated substrates can be referred to, for convenience, as metals (i), metal (ii) and metals (iii). The metals can be used in either a zero valence state or a non-zero valence state.

The metals (i) group for use in the coated substrates include platinum, and can be present as, for example, 70 weight percent platinum and at least one of ruthenium, palladium and combinations (or alloys) thereof. Preferred metals (i) are platinum and platinum/ruthenium compositions. Metals (i) also include metals, metal oxides, and hydrated metal oxides or combinations thereof, and do not include the catalyst support. The metal (i) compositions are described herein by reference to the weight percentage of the metal element as a percentage of the total electrocatalyst weight.

With respect to the catalyst, it may contain only Pt on the support or a combination of Pt and Ru, wherein when the combination is utilized the ratio of Pt:Ru of preferably ranges from 1:1 to 1:4.

The metals (ii) group includes iron, cobalt and nickel metalloporphyrins and phthalocyanines (transition metal macrocycles). The metal (ii) compositions are described as the weight percentage of the metal element as a percentage of the overall electrocatalyst weight. The preparation of transition metal macrocycles as electroreduction catalysts is known and is described, for example, in EP 376689 A2 (Cuchajowski et al). Macrocycles such as cobalt and iron porphyrins, and related compounds such as the phthalocyanines possess activity for oxygen electroreduction. Supportation can be accomplished by known methods, including dissolution and direct imbibement onto the catalyst support.

The metals (iii) group includes ruthenium, rhodium, molybdenum and tungsten (transition metal chalcogenides). "Metals (iii)" include the metals, metal sulfides, selenides, and tellurides and combinations thereof. The metal (iii) compositions are described as the weight percentage of the metal element as a percentage of the overall electrocatalyst. The preparation of the transition metal chalcogenides is known. Supportation can be accomplished by known methods, including direct imbibement on the support of soluble precursors of the metals and chalcogens, followed by calcinations in nitrogen or in hydrogen sulfide.

In the electrocatalyst coating composition, it is preferable to adjust the amounts of anode electrocatalyst, ion exchange polymer and other components, if present, so that the anode electrocatalyst is the major component by weight of the resulting electrode. More preferably, the weight ratio of anode electrocatalyst to ion exchange polymer in the electrode is about 0.5:1 to about 20:1, more preferably 2:1 to 10:1.

Known electrocatalyst coating techniques can be used and produce a wide variety of applied layers of essentially any thickness ranging from very thick, e.g., 30 μm or more, to very thin, e.g., 1 μm or less. Preferably, the electrode thickness ranges from about 0.1 to about 30 microns, more preferably less than 25 micron. The applied layer thickness is dependent upon compositional factors as well as the process used to generate the layer. The compositional factors include the metal loading on the coated susbtrate, the void fraction (porosity) of the layer, the amount of polymer/ionomer used, the density of the polymer/ionomer, and the density of the support. The process used to generate the layer (e.g.

a hot pressing process versus a painted on coating or drying conditions) can affect the porosity and thus the thickness of the layer. For example, the interaction of the above-noted factors affecting the thicknesses is shown in Table 1, however these values can change based on the types of metal(s), support, porosity of the electrode,

Table 1.

| Description | Electrode Thickness (80 wt % voids) | wt fraction of metal in catalyst composition (approx.) | wt fraction of Nafion® or other polymer/ionomer in dry catalyst ink |
|---|---|---|---|
| 75.9 wt % PtRu/C | 18.68 | 0.76 | 0.15 |
| 75.9 wt % Pt/C (15 wt % Nafion in ink) | 17.78 | 0.76 | 0.15 |
| 75.9 wt % Pt/C | 29.01 | 0.76 | 0.33 |

Assumptions (densities): C= 2.26 g/cc; Pt = 21.4 g /cc; PtRu = 17.0 g/cc; Nafion® = 2.11 g /cc

For the above calculations, the metal loading on the coated substrate was 1.5 mg (metal/cm$^2$); the void fraction was 0.8; the density of the support was 2.26 g/cc; and the density of Nafion® or other polymer/ionomer was 2.11 g/cc.

For a given support, metal and polymer/ionomer density, % metal in catalyst composition, and catalyst: polymer ratio in an ink, the thickness can be determined by:

$$\text{thickness (μm)} = (1/\text{void fraction})(\text{ coated substrate metal loading})(1/\text{density of metal})(1/1000) + (1- \text{weight fraction of metal in catalyst})(\text{coated substrate metal loading})(1/\text{density of support}) + ((\text{wt fraction of polymer in dry ink})/(1-\text{weight fraction of metal in catalyst composition}))(\text{ coated substrate metal loading})(1/\text{density of polymer/ionomer in ink})(1/1000).$$

To produce an electrocatalyst, in one preferred process in which a carbon support is employed, an aqueous platinum mixture is provided. The aqueous platinum mixture contains a soluble platinum precursor that either is in a lower valence state (below Pt 4+) or can be reduced to a lower valence state. The platinum in the aqueous platinum mixture is preferably provided in its +2 oxidation state for use in making the catalyst. For example, chloroplatinic acid, $H_2PtCl_6$ can be reduced with $NaHSO_3$ to form $H_3Pt(O_3)_2OH$, platinum sulfite acid, a Pt(II) reagent, in situ. Chloroplatinic acid contains Pt in a +4 oxidation state, i.e., Pt(IV). Alternatively, $H_3Pt(SO_3)_2OH$, or other soluble platinum +2 (Pt(II)) salts such as ammonium tetrachloroplatinate (II), potassium tetrachloroplatinate (II), water soluble platinum (II) phosphine complexes (e.g. chlorotris(2,3,5-triaza-7-phosphoadamantane)platinum (II) chloride, $(TPA)_3PtCl_2$) or other lower valent water soluble platinum salts, can be used directly. However, the use of chloroplatinic acid, followed by reaction with $NaHSO_3$, or of $H_3Pt(SO_3)_2OH$ directly is preferred.

Electrocatalysts containing platinum can be prepared by a process using chloroplatinic acid. The concentration of the chloroplatinic acid solution is not critical. However, the concentration of chloroplatinic acid can generally vary between about 1 and about 20 weight percent platinum, with about 5 to about 15 weight percent platinum being advantageously used.

When an electrocatalyst comprising platinum and ruthenium is used, it can be prepared using a reagent solution containing ruthenium, such as ruthenium chloride solution, combined with an aqueous platinum mixture in the presence of an oxidant, to form an electrocatalyst mixture. Ruthenium chloride solutions can be prepared by methods known to those skilled in the art. Although the concentration of ruthenium chloride in the solution is not critical, from about 1 weight percent to about 10 weight percent can be advantageously used, and about 2 weight percent is preferred. The ruthenium chloride solution is preferably added to the aqueous platinum mixture. Also preferably, when used with a carbon support, the ruthenium chloride solution is added at a rate greater than 0.3 mmoles Ru/minute, preferably from about 0.7 to about 4.0 mmoles ruthenium/minute, more preferably, from about 0.9 to about 3.6 mmoles Ru/minute. Other soluble ruthenium precursors can also be used, such as ruthenium (III) nitrosylnitrate, ruthenium (III) nitrosylsulfate, and other water soluble ruthenium reagents with a ruthenium valence less than (IV). Ruthenium chloride is preferred.

Following the generation of, or with the direct use of, a Pt(II) reagent, and the formation of the electrocatalyst mixture, an oxidizer, such as hydrogen peroxide, is added to the electrocatalyst mixture. Other suitable oxidizing agents include water soluble agents (e.g., hypochlorous acid) or gas phase oxidizing agents such as ozone. Gas phase oxidizing agents can be introduced by bubbling into the liquid media. The oxidizing agent is added to convert the Pt(II) reagent to colloidal $PtO_2$, in which platinum is Pt(IV). The introduction of the oxidizing agent forms a colloid mixture, in which the platinum is present in colloidal form. When ruthenium chloride is present in the electrocatalyst mixture, and excess oxidizing agent, e.g., excess hydrogen peroxide, is present, the oxidizing agent can react with the ruthenium chloride to form ruthenium oxide, which is also present as a colloid.

The amount of hydrogen peroxide used in the reaction can be from about 15:1 to 700:1, based on the mole ratio of $H_2O_2$ to total moles of metal, preferably 100:1 to 300:1 and more preferably about 211:1.

Alternatively, instead of adding all of the hydrogen peroxide after the addition of the platinum solutions, a portion of the hydrogen peroxide can be added simultaneously with the ruthenium chloride.

A surfactant or dispersant can be added to the chloroplatinic acid solution, following the addition of $NaHSO_3$ to generate $H_3Pt(SO_3)_2OH$). Alternatively, if the Pt(II) reagent is incorporated directly rather than generated in situ, a surfactant or dispersant can be added directly thereto. However, a surfactant or dispersant can also be directly added after the addition of the ruthenium chloride, which may be desirable when foaming or reaction of the surfactant with hydrogen peroxide is likely. As yet another alternative, the surfactant or dispersant can be added to the carbon support, which is then added to the colloid mixture. In one preferred embodiment, the surfactant is added to the colloid mixture following the $RuCl_3$ addition, optionally dispersing the carbon support and adding the surfactant carbon support slurry to the reaction mixture.

Surfactants and dispersants are known to those skilled in the art. As used herein, "dispersants" refers to a class of materials that are capable of bringing fine solid particles into a state of suspension so as to inhibit or prevent their agglomeration or settling in a fluid medium. The term "surfactant" (or surface active agent) as used herein refers to substances with certain characteristic features in structure and properties, such as amphipathic structure (having groups with opposing solubility tendencies); solubility in liquid media; formation of micelles at certain concentrations; formation of orientated monolayers at phase interfaces surfactant molecules and ions form oriented monolayers at phase interfaces (in this case, liquid- solid interface); and adsorption at interfaces. Thus, although a surfactant can operate to disperse particles, a dispersant need not have the properties of a surfactant and can operate by different mechanisms than would a surfactant. Accordingly, the terms are not used interchangeably herein. Surfactants and dispersants suitable for use in the processes for making the electrocatalysts can be anionic surfactants containing carboxylate, sulfonate, sulfate or phosphate groups; and nonionic surfactants such as those derived from ethoxylates, carboxylic acid esters, carboxylic amines, and polyalkylene oxide block copolymers.

In some embodiments, when surfactants are used, non-ionic surfactants are preferred. In some embodiments, when dispersants are used, anionic dispersants are preferred. An exemplary anionic surfactant is Tergitol® 15-S-40 (25% aqueous), which is an alkyl alcohol ethoxylate. Exemplary non-ionic dispersants are Daxad® dispersing agents, which are available from Hampshire Chemical Corporation, Houston, Texas. Daxad® dispersing agents include a variety of high and low molecular weight condensed naphthalene sulfonates.

In some embodiments where a carbon support is utilized, the surfactant or dispersant is provided in the form of a suspension. The suspension contains sufficient surfactant or dispersant to stabilize the colloid and/or the carbon support. Preferably, the suspension contains from about .0001 weight percent to about 20 weight percent of surfactant or dispersant based on the total combined weight of solids. Total combined weight of solids means the total weight of surfactant/dispersant, platinum, and particulate carbon. More preferably, the suspension contains from about 0 weight percent to about 10 weight percent of surfactant or dispersant, even more preferably from about .01 to about 5 weight percent surfactant or dispersant, still more preferably from about 1 to about 2 weight percent surfactant or dispersant, based on the total combined weight of solids. The concentration of surfactant or dispersant in the suspension is not critical. However, it has been found that a surfactant or dispersant concentration of about 10 weight percent can be advantageously used.

In alternate embodiments, the surfactant or dispersant can be provided in solid form. When provided in solid form, the relative quantity of surfactant or dispersant to platinum and particulate carbon is preferably the same as the preferred quantity for surfactant or dispersant provided in a suspension.

Sodium hydrogen sulfite, $NaHSO_3$, which'converts platinum (IV) chloride to a platinum (II) hydrogen sulfite, can also be present in the suspension and can be provided in this manner for the conversion of the platinum to the +2 oxidation state. The concentration of $NaHSO_3$ can vary, and, expressed in terms of the mole ratio of $NaHSO_3$ to platinum, is preferably from about 3:1 to about 20:1, more preferably from about 5:1 to about 15:1, and even more preferably from about 7:1 to about 12:1.

After the ruthenium and platinum reagents have been combined to form a catalyst mixture and following addition of hydrogen peroxide, chemically treated particulate carbon, such as acidified particulate carbon, is added to the catalyst mixture. The carbon can be provided, for example, as a slurry or in solid form. Chemically treating the carbon can be accomplished by methods know to those skilled in the art. Acidification can be carried using various oxidizing acids. For example, carbon particles can be treated with an oxidizing agent such as oxygen gas, hydrogen peroxide, organic peroxides, ozone, or they can be oxidized and acidified with oxidizing acids such as, for example, nitric acid, perchloric acid, chloric acid, permanganic acid, or chromic acid. In some embodiments, a slurry of particulate carbon can be made with a dilute acid solution, and acidification can be effected by heating, for example, by refluxing the slurry. Optionally, in particular when the particles are treated with a functionalizing agent such as oxygen gas, ozone or a volatile organic peroxide, the particles can be heated, for example, to a temperature of about 175° C, preferably no higher than about 100° C to avoid decomposition of the carbon.

After the support has been added to the catalyst mixture, the catalyst mixture and carbon are contacted with a precipitating agent, which, it is believed, partially reduces the catalyst mixture and helps precipitate or deposit the catalyst particles on the support. Hydrogen gas is a preferred precipitating agent. Optionally, the contacting with the reducing agent can be done in a controlled environment, such as, for example, in the presence of nitrogen. The use of an inert atmosphere such as a nitrogen atmosphere may be desirable when hydrogen gas is used as the precipitating agent.

Controlling the rate of addition of certain components used in making the electrocatalysts to other components improves the quality of the electrocatalysts produced according to the processes disclosed herein. In addition, functionalization of the particulate carbon support used in the processes, when combined with control of the rate of addition of components to each other, provides unexpected improvement in the properties of the electrocatalyst produced, in the presence of a surfactant or dispersant, including minimization or elimination of metal particle agglomeration on the catalyst support. Moreover, in the presence of a dispersant or surfactant the improvement in properties was unexpectedly greater than the improvement observed due to each of the two variables, namely functionalization and controlled rate of addition, independently.

Any liquid medium compatible with the process for creating the GDE or CCM, or for coating the electrocatalyst onto the substrate can be used. It is advantageous for the medium to have a sufficiently low boiling point that rapid drying of electrode layers is possible under the process conditions employed, provided however, that the composition does not dry so fast that the composition dries on the substrate before transfer to the membrane. When flammable constituents are to be employed, the medium can be selected to minimize process risks associated with such constituents, as the medium is in contact with the electrocatalyst during use. The medium is also sufficiently stable in the presence of the ion exchange polymer that, in the acid form, has strong acidic activity. The liquid medium is typically polar for compatibility with the ion exchange polymer, and is preferably able to wet the membrane. While it is possible for water to be used as the liquid medium, the medium is preferably such that the ion exchange polymer coalesces upon drying and does not require post treatment steps such as heating to form a stable electrode layer.

A wide variety of polar organic liquids and mixtures thereof can serve as suitable liquid media for the electrocatalyst coating composition. Water in minor quantity can be present in the medium if it does not interfere with the coating process. Although some polar organic liquids can swell the membrane when present in sufficiently large quantity, the amount of liquid used in the electrocatalyst coating is preferably small enough that the adverse effects from swelling during the process are minor or undetectable. It is believed that solvents able to swell the ion exchange membrane can provide better contact and more secure application of the electrode to the membrane. A variety of alcohols are well suited for use as the liquid medium.

Typical liquid media include suitable $C_4$ to $C_8$ alkyl alcohols such as n-, iso-, sec- and tert-butyl alcohols; the isomeric 5-carbon alcohols such as 1, 2- and 3-pentanol, 2-methyl-1-butanol, 3-methyl, 1-butanol; the isomeric 6-carbon alcohols, such as 1-, 2-, and 3-hexanol, 2-methyl-1-pentanol, 3-methyl-1-pentanol, 2-methyl-1-pentanol, 3-methyl, 1-pentanol, 4-methyl-1-pentanol; the isomeric $C_7$ alcohols and the isomeric $C_8$ alcohols. Cyclic alcohols are also suitable. Preferred alcohols are n-butanol and n-hexanol, and n-hexanol is more preferred.

The amount of liquid medium in the anode electrocatalyst varies and is determined by the type of medium employed, the constituents of the electrocatalyst coating, the type of coating equipment employed, desired electrode thickness, process speeds etc.

It has been found that the commercially available dispersion of the acid form of the perfluorinated sulfonic acid polymer, sold by E.I. du Pont de Nemours and Company under the trademark Nafion®, in a water/alcohol dispersion, can be used as a starting material to prepare the electrocatalyst coating composition. Using this ion exchange polymer containing the dispersion of the acid form of the perfluorinated sulfonic acid polymer, as a binder and proton transport component for the electrocatalyst coating composition, the electrocatalyst can be added to form the electrocatalyst coating composition.

The present invention also contemplates an assembly including the membrane, and gas diffusion backings with the electrocatalyst composition coated either on the membrane or the gas diffusion backings or on both, wherein this is sometimes referred to as a membrane electrode assembly ("MEA"). Bipolar separator plates, made of a conductive material and providing flow fields for the reactants, are placed between a number of adjacent MEAs. A number of MEAs and bipolar plates are assembled in this manner to provide a fuel cell stack.

For the electrodes to function effectively in the fuel cells, effective anode and cathode electrocatalyst sites are provided. Effective anode and cathode electrocatalyst sites have several desirable characteristics: (1) the sites are accessible to the reactant, (2) the sites are electrically connected to the gas diffusion layer, and (3) the sites are ionically connected to the fuel cell electrolyte.

It is desirable to seal reactant fluid stream passages in a fuel cell stack to prevent leaks or inter-mixing of the fuel and oxidant fluid streams. Fuel cell stacks typically employ fluid tight resilient seals, such as elastomeric gaskets between the separator plates and membranes. Such seals typically circumscribe the manifolds and the electrochemically active area. Sealing can be achieved by applying a compressive force to the resilient gasket seals. Compression enhances both sealing and electrical contact between the surfaces of the separator plates and the MEAs, and sealing between adjacent fuel cell stack components. In conventional fuel cell stacks, the fuel cell stacks are typically compressed and maintained in their assembled state between a pair of end plates by one or more metal tie rods or tension members. The tie rods typically extend through holes formed in the stack end plates, and have associated nuts or other fastening means to secure them in the stack assembly. The tie rods can be external, that is, not extending through the fuel cell plates and MEAs, however, external tie rods can add significantly to the stack weight and volume. It is generally preferable to use one or more internal tie rods that extend between the stack end plates through openings in the fuel cell plates and MEAs as described in U.S. Patent No. 5,484,666. Typically resilient members are utilized to cooperate with the tie rods and end plates to urge the two end plates towards each other to compress the fuel cell stack.

The resilient members accommodate changes in stack length caused by, for example, thermal or pressure induced expansion and contraction, and/or deformation. That is, the resilient member expands to maintain a compressive load on the fuel cell assemblies if the thickness of the fuel cell assemblies shrinks. The resilient member may also compress to accommodate increases in the thickness of the fuel cell assemblies. Preferably, the resilient member is selected to provide a substantially uniform compressive force to the fuel cell assemblies, within anticipated expansion and contraction limits for an operating fuel cell. The resilient member can comprise mechanical springs, or a hydraulic or pneumatic piston, or spring plates, or pressure pads, or other resilient compressive devices or mechanisms. For example, one or more spring plates can be layered in the stack. The resilient member cooperates with the tension member to urge the end plates toward each other, thereby applying a compressive load to the fuel cell assemblies and a tensile load to the tension member.

Fuel cells made using the coated substrates as disclosed herein showed an unexpected improvement in performance in comparison to comparably equipped conventional fuel cells, i.e., comprising comparable components and run under similar conditions except utilizing electrocatalysts having a metal content of less than 70 weight percent. As shown in the following Examples, the fuel cells showed at least a 5% increase in current in the voltage range of about 0.2V to about 0.5V under the cited conditions as compared to other fuel cells.

EXAMPLES

Example 1

A. Anode catalyst preparation 90 weight percentPtRu/Vulcan Carbon (theoretical); by chemical composition, 53.05 weight percentPt, 28.3 weight percentRu on carbon

1.8 g of 3.8 wt % (as Pt) chloroplatinic acid solution (prepared by combining $H_2PtCl_6$, Aldrich, 26.258-7, St. Louis MO, with water to create a 3.8 wt % aqueous solution based on platinum) and 718 ml of water was added to a 5 liter container containing a magnetic stirring bar, and was placed onto a large magnetic stirring plate. 9.07 g of $NaHSO_3$ (J.T. Baker, 3556,01, Phillipsburg NJ) was added, and stirred for five minutes with an additional 1928 ml of water. The pH was then adjusted to approximately 5.0 using a dilute sodium carbonate solution (52.74 g of a 0.6 molar solution). 378 of a 35 wt % solution of hydrogen peroxide (Aldrich) was added. The solution pH was brought to 5 using a sodium hydroxide solution (47 g of 5 wt % NaOH). 0.9326 g of a 1.90 wt %, as Ru, of a $RuCl_3$ solution, created by mixing $RuCl_3$, 206229, St. Louis MO with water to prepare a 1.90 wt % solution as ruthenium) was slowly added to the solution containing the platinum. Following this addition, the pH was raised to about 5.0 (using a 5 wt% NaOH solution, approximately 28.4 g).

0.27 g of Vulcan® XC72R carbon (Cabot Corporation, Boston MA) was added, and stirred for 15 minutes, until the pH was stabilized.

The mixture was then placed in a container where nitrogen gas could be introduced through a glass frit that was submerged near the bottom of the reaction vessel (rate of 150 ml/min). 130 ml/minute of 100% $H_2$ gas was then introduced, and the mixture was "gas sparged" in this way for approximately 30 minutes while it was mechanically stirred.

Following the hydrogen sparging procedure, the reaction container was purged with $N_2$ gas for approximately 20 minutes (rate of 50 ml/min) and then filtered on a two micron filter disk. It was subsequently washed with 2 liters of water. The filter cake was allowed to dry in the air overnight before use.

A second preparation of this catalyst was made and blended with the first preparation.

B. Cathode Catalyst

Platinum, unsupported powder (Colonial Metals (Elkton, Md.)).

C. Catalyst Coated Membrane Preparation Procedure

The cathode catalyst dispersion was prepared in an Eiger® bead mill, (manufactured by Eiger Machinery Inc., Greylake, IL 60030), containing 80 ml 1.0-1.25 zirconia grinding media. 13.5 grams of platinum black catalyst powder (catalyst grade obtained from Colonial Metals, Elkton Md.) and 42.8 grams of the 3.5 wt % Nafion® solution (the polymer resin used in such a solution was typically of 930EW polymer and was in the sulfonyl fluoride form) were mixed and charged into the mill and dispersed for 2 hours. Material was withdrawn from the mill and particle size measured. The ink was tested to ensure that the particle size was under 1 micron and the % solids in the range of 13.56-13.8. The catalyst decal was prepared by drawing down the catalyst ink to a dimension of 5 cm x 5 cm (to give a total area of 25 $cm^2$) on a 10 cm x 10 cm piece of 3 mil thick Kapton® polyimide film (manufactured by E.I. duPont de Nemours and Company, Wilmington, DE). A wet coating thickness of 5 mil (125 microns) typically resulted in a catalyst loading of 4-5 $mgPt/cm^2$ in the final CCM.

Anode decals were prepared using a procedure similar to that described above, except that in the catalyst dispersion, the platinum black catalyst was replaced by the 81 wt % PtRu/C catalyst described in part (A). In this case, 6 g of the catalyst was mixed with 24.5 g of 3.5 wt % Nafion® solution to create the dispersion.

The CCM was prepared by a decal transfer method. A piece of wet Nafion® N117 membrane (4" x 4") in the H+ form was used for CCM preparation. The membrane was sandwiched between two anode and cathode catalyst coated decals. Care was taken to ensure that the coatings on the two decals were registered with each other and were positioned facing the membrane. The entire assembly was introduced between two preheated (to 145°C) 8" x 8" plates of a hydraulic press and the plates of the press were brought together without wasting much time until a pressure of 2268kg (5000 lbs) was reached. The sandwich assembly was kept under pressure for approximately 2 minutes and then the press was cooled for approximately 2 minutes (viz. till it reached a temperature of < 60°C) under the same pressure. Then the assembly was removed from the press and the Kapton® films were slowly peeled off from the top of the membrane showing that the catalyst coating had been transferred to the membrane. The CCM was immersed in a tray of water (to ensure that the membrane was completely wet) and carefully transferred to a zipper bag for storage and future use.

C. Chemical Treatment of CCM's

The CCM's were chemically treated in order to convert the ionomer in the catalyst layer from the $SO_2F$ form to the H+ form. This required a hydrolysis treatment followed by an acid exchange procedure. The hydrolysis of the CCM's was carried out in a 30 wt % NaOH solution at 80°C for 30 minutes. The CCM's were placed between Teflon® mesh, (manufactured by E.I. duPont de Nemours and Company, Wilmington, DE), and placed in the solution. The solution was stirred to assure uniform hydrolysis. After 30 minutes in the bath, the CCM's were removed and rinsed completely with fresh deionized water to remove all the NaOH.

Acid exchange of the CCM's that were hydrolyzed in the previous step was done in 15 wt% nitric acid solution at a bath temperature of 65°C for 45 minutes. The solution was stirred to assure uniform acid exchange. This procedure was repeated in a second bath containing 15 wt % nitric acid solution at 65°C and for 45 minutes.

The CCM's were then rinsed in flowing deionized water for 15 minutes at room temperature to ensure removal of all the residual acid. They were then packaged wet and labeled. The CCM comprised a Nafion® perflourinated ion exchange membrane; and electrodes, prepared from a platinum catalyst and Nafion® binder on the cathode and a platinum/ruthenium catalyst and Nafion® binder on the anode side.

D. Fuel Cell Performance Evaluation Procedure

Fuel cell test measurements were made employing a single cell test assembly obtained from Fuel Cell Technologies Inc, New Mexico. The MEA comprised the CCM sandwiched between two sheets of the GDB (taking care to ensure that the GDB covered the catalyst coated area on the CCM). The anode gas diffusion backing comprised Zoltek carbon cloth (Zoltek Companies, St. Louis MO). The cathode diffusion backing comprised an ELAT with a single microporous layer from E-Tek Inc., Natick, MA. The microporous layer was disposed toward the cathode catalyst. A glass fiber reinforced silicone rubber gasket (Furan - Type 1007, obtained from Stockwell Rubber Company), cut to shape to cover the exposed area of the membrane of the CCM, was placed on either side of the CCM/GDB assembly (taking care to avoid overlapping of the GDB and the gasket material). The entire sandwich assembly was assembled between the anode and cathode flow field graphite plates of a 25 $cm^2$ standard single cell assembly (obtained from Fuel Cell Technologies Inc., Los Alamos, NM). The test assembly was also equipped with anode inlet, anode outlet, cathode gas inlet, cathode gas outlet, aluminum end blocks, tied together with tie rods, electrically insulating layer and the gold plated current collectors. The bolts on the outer plates of the single cell assembly were tightened with a torque wrench to a force of 2.0 N.m (1.5ft.lbs).

The single cell assembly was then connected to the fuel cell test station. The components in a test station include a supply of air for use as cathode gas; a load box to regulate the power output from the fuel cell; a MeOH solution tank to hold the feed anolyte solution; a heater to pre-heat the MeOH solution before it entered the fuel cell; a liquid pump to feed the anolyte solution to the fuel cell at the desired flow rate; a condenser to cool the anolyte exiting from the cell from the cell temperature to room temperature and a collection bottle to collect the spent anolyte solution.

With the cell at room temperature, 1 M MeOH solution and air were introduced into the anode and cathode compartments through inlets of the cell at flow rates of 25cc/min and 3 SLPM (standard liters per minute), respectively. The gas streams were humidified with water vapor before they entered the cell. The temperature of the single cell was slowly raised until it reached 80°C. Typically, a current-voltage polarization curve was recorded. This comprised of recording the current output from the cell as the voltage was stepped down in 50 mV steps starting from the open circuit voltage (OCV) down to 0.15 V and back up to OCV. The voltage was held constant in each step for 20 seconds to allow for the current output from the cell to stabilize.

The current from this polarization evaluation is tabulated for each fuel cell evaluation at 0.2 V and 0.5 V versus NHE.

For Example 1, the anode loading, expressed in mg metal/cm$^2$ is 1.44 mg PtRu/cm$^2$. The cathode was loaded to 4.4 mg Pt/cm$^2$ (unsupported cathode.

Fuel Cell Data, 80°C, 1 M MeOH, 3 SLPM air:

| I (amps) @ 0.5 V | I (amps) @ 0.2 V |
| --- | --- |
| 4.86 | 27.57 |

### Example 2

The procedure described in Example 1 was also used in this Example 2, with the following differences.

For Example 2, the anode loading, expressed in mg metal/cm$^2$ is 1.51 mg PtRu/cm$^2$ (anode). The cathode was loaded to 4 mg Pt/cm$^2$ (unsupported) cathode. (Anode catalyst: 75 wt % PtRu/Vulcan® XC72R; Cathode catalyst: Pt, unsupported)

The anode catalyst was prepared according to the following procedure. An identical procedure as described in Example 1 was followed, except that a composition comprising 50 wt% Pt, 25.9 wt % Ru and 24.1 wt % carbon was prepared. The reagents were adjusted by a factor of six in all cases. Hence, 9.004 g of platinum (using chloroplatinic acid solution), 4.664 g of Ru (using RuCl$_3$ solution), and 4.34 g of carbon were used. Sodium persulfite (Na$_2$S$_2$O$_2$, 41.42 g) was used in place of the sodium hydrogen sulfite. The hydrogen sparging step was extended to 3 hours.
(1.5065 mg PtRu/cm$^2$ (anode), approximately 4 mg Pt/cm$^2$ (unsupported) cathode)

Fuel Cell Data, 80°C, air, 1M MeOH, 3 SLPM air:

| I (amps) @ 0.5 V | I (amps) @ 0.2 V |
| --- | --- |
| 5.81 | 28.08 |

### Comparative Example A

The procedure described in Example 1 was also used in this Comparative Example A. In this case, 45.5wt %PtRu/Vulcan® XC72R was prepared. The scale of the catalyst preparation was increased to a factor of 20, adjusting for the change in composition (to 45.5 wt% PtRu/C).

Hence, 18 g (as platinum) of chloroplatinic acid solution was used, in addition to 9.3 g of Ru (as ruthenium chloride solution) and 32.7 of Vulcan® XC72R carbon.

48 wt % H$_2$O$_2$ was used in these preparations. The quantity of H$_2$O$_2$ is roughly 255:1 atomic ratio, or in vast excess. 1 100L vessel was used.

The CCM was loaded to 1.19 mg PtRu/cm$^2$ (anode) and 4.1 mg Pt./cm$^2$ (unsupported platinum black, cathode).
(Anode catalyst: 48wt % PtRu/Vulcan XC72R; Cathode catalyst Pt, unsupported;1.19 mg PtRu/cm2 (anode), 4.1 mg Pt/cm2 (unsupported) cathode))

| Fuel Cell Data, 80°C, air, 1 M MeOH, 3 SLPM air: | |
|---|---|
| I (amps) @ 0.5 V | I (amps) @ 0.2 V |
| 2.5 | 19 |

Comparative Example B:

The procedure described in Example 1 was also used in this Comparative Example B. A commercially available anode, manufactured by the ETEK Corporation (Somerset, NJ) was used. The composition is 48.3 wt % PtRu/C (1:1 atomic ratio, Pt:Ru)
Anode catalyst ETEK, 48.3 wt % PtRu/Vulcan XC72R; Cathode catalyst Pt, unsupported; 1.21 mg PtRu/cm2 (anode), 4.13 mg Pt/cm2 (unsupported) cathode)

| Fuel Cell Data, 80°C, air, 1 M MeOH, 3 SLPM air: | |
|---|---|
| I (amps) @ 0.5 V | I (amps) @ 0.2 V |
| 3.1 | 20.6 |

The fuel cells produced in accordance with the present invention in Examples 1 and 2 clearly provide more current than those of Comparative Examples A and B. The resultant increase in current is an unexpected result of the high metal support ratio in the electrocatalyst.

**Claims**

1. A coaled substrate comprising:

   (a) a substrate; and
   (b) an electrocatalyst applied to the substrate, wherein the electrocatalyst comprises a support and a metal, wherein the metal is at least 70 wt.-% of the electrocatalyst.

2. The coated substrate according to claim 1, wherein the electrocatalyst comprises about 70 -90 wt.%- of the metal.

3. The coated substrate according to claim 1, wherein the substrate is an ion exchange membrane.

4. The coated substrate according to claim 3, wherein the ion exchange membrane is a perfluorinated sulfonic acid membrane in acid form.

5. The coated substrate according to claim 1, wherein the substrate is a gas diffusion backing.

6. The coated substrate according to claim 5, wherein the gas diffusion backing is a carbon-fiber based paper or cloth.

7. The coated substrate according to claim 1, wherein the support comprises at least one of particulate carbon, conducting polymers, transition metal carbide, metal carbide composites, metal oxides and metal oxide bronze.

8. The coated substrate according to claim 7, wherein the support is particulate carbon.

9. The coated substrate according to claim 8, wherein the carbon support has an oxygen content of less than 5%.

10. The coated substrate according to claim 1, wherein the metal is platinum or platinum and at least one of ruthenium, palladium, or combinations thereof.

11. The coated substrate according to claim 1, wherein the metal is an iron metalloporphyrin or phthalocyanine, cobalt metalloporphyrins or phthalocyanines or nickel metalloporphyrins or phthalocyanines.

12. The coated substrate according to claim 1, wherein the metal is ruthenium, rhodium, molybdenum and tungsten.

**13.** The coated substrate according to claim 1, wherein the electrocatalyst is an anode catalyst.

**14.** The coated substrate according to claim 1, wherein the catalyst is a cathode catalyst.

**15.** The coated substrate according to claim 1, wherein the electrocatalyst further comprises a hinder.

**16.** The coated substrate according to claim 15, wherein the binder is an ion exchange poly mer.

**17.** A membrane electrode assembly comprising a coated substrate according to one of claims 1-16.

**18.** A fuel cell comprising a coated substrate according to one of claims 1-16.

**19.** A fuel cell stack comprising the fuel cell according to claim 18.

**Patentansprüche**

**1.** Beschichtetes Substrat umfassend:

(a) ein Substrat; und
(b) einen Elektrokatalysator, der auf das Substrat aufgebracht wird, wobei der Elektrokatalysator einen Träger und ein Metall umfasst, wobei das Metall mindestens 70 Gew.-% des Elektrokatalysators ausmacht.

**2.** Beschichtetes Substrat nach Anspruch 1, wobei der Elektrokatalysator etwa 70 - 70 Gew.-% des Metalls umfasst.

**3.** Beschichtetes Substrat nach Anspruch 1, wobei das Substrat eine Ionenaustauschmembran ist.

**4.** Beschichtetes Substrat nach Anspruch 3, wobei die Ionenaustauschmembran eine perfluorierte Sulfonsäuremembran in saurer Form ist.

**5.** Beschichtetes Substrat nach Anspruch 1, wobei das Substrat ein Gasdiffusionsträger ist.

**6.** Beschichtetes Substrat nach Anspruch 5, wobei der Gasdiffusionsträger ein Papier oder Tuch auf der Basis von Kohlefaser ist.

**7.** Beschichtetes Substrat nach Anspruch 1, wobei der Träger mindestens eines der folgenden umfasst: einen teilchenförmigen Kohlenstoff, leitende Polymere, Übergangsmetallcarbid, Metallcarbidverbundstoffe, Metalloxide und Metalloxidbronze.

**8.** Beschichtetes Substrat nach Anspruch 7, wobei der Träger teilchenförmiger Kohlenstoff ist.

**9.** Beschichtetes Substrat nach Anspruch 8, wobei der Kohlenstoffträger einen Sauerstoffgehalt von weniger als 5 % aufweist.

**10.** Beschichtetes Substrat nach Anspruch 1, wobei das Metall Platin oder Platin und mindestens eines von Ruthenium, Palladium oder Kombinationen davon ist.

**11.** Beschichtetes Substrat nach Anspruch 1, wobei das Metall ein Eisenmetalloporphyrin oder -phthalocyanin, Kobaltmetalloporphyrine oder - phthalocyanine oder Nickelmetalloporphyrine oder -phthalocyanine ist.

**12.** Beschichtetes Substrat nach Anspruch 1, wobei das Metall Ruthenium, Rhodium, Molybdän und Wolfram ist.

**13.** Beschichtetes Substrat nach Anspruch 1, wobei der Elektrokatalysator ein Anodenkatalysator ist.

**14.** Beschichtetes Substrat nach Anspruch 1, wobei der Katalysator ein Kathodenkatalysator ist.

**15.** Beschichtetes Substrat nach Anspruch 1, wobei der Elektrokatalysator des Weiteren ein Bindemittel umfasst.

**16.** Beschichtetes Substrat nach Anspruch 15, wobei das Bindemittel ein Ionenaustauschpolymer ist.

**17.** Membranelektrodenbaugruppe umfassend ein beschichtetes Substrat nach einem der Ansprüche 1 - 16.

**18.** Brennstoffzelle umfassend ein beschichtetes Substrat nach einem der Ansprüche 1 - 16.

**19.** Brennstoffzellenstapel umfassend die Brennstoffzelle nach Anspruch 18.

**Revendications**

**1.** Substrat revêtu comprenant:

(a) un substrat; et
(b) un électrocatalyseur appliqué sur le substrat, dans lequel l'électrocatalyseur comprend un support et un métal, dans lequel le métal est au moins 70% en poids de l'électrocatalyseur.

**2.** Substrat revêtu selon la revendication 1, dans lequel l'électrocatalyseur comprend environ 70-90% en poids du métal.

**3.** Substrat revêtu selon la revendication 1, où le substrat est une membrane échangeuse d'ions.

**4.** Substrat revêtu selon la revendication 3, dans lequel la membrane échangeuse d'ions est une membrane d'acide sulfonique perfluoré sous une forme acide.

**5.** Substrat revêtu selon la revendication 1, où le substrat est une doublure de diffusion gazeuse.

**6.** Substrat revêtu selon la revendication 5, dans lequel la doublure de diffusion gazeuse est un papier ou un tissu à base de fibres de carbone.

**7.** Substrat revêtu selon la revendication 1, dans lequel le support comprend au moins un parmi un carbone particulaire, des polymères conducteurs, un carbure de métal de transition, des composites de carbure de métal, des oxydes de métal et un bronze d'oxyde de métal.

**8.** Substrat revêtu selon la revendication 7, dans lequel le support est un carbone particulaire.

**9.** Substrat revêtu selon la revendication 8, dans lequel le support de carbone possède une teneur en oxygène de moins de 5%.

**10.** Substrat revêtu selon la revendication 1, dans lequel le métal est le platine ou le platine et au moins un parmi le ruthénium, le palladium ou des combinaisons de ceux-ci.

**11.** Substrat revêtu selon la revendication 1, dans lequel le métal est une métalloporphyrine ou une phtalocyanine de fer, des métalloporphyrines ou des phtalocyanines de cobalt ou des métalloporphyrines ou des phtalocyanines de nickel.

**12.** Substrat revêtu selon la revendication 1, dans lequel le métal est le ruthénium, le rhodium, le molybdène ou le tungstène.

**13.** Substrat revêtu selon la revendication 1, dans lequel l'électrocatalyseur est un catalyseur pour anode.

**14.** Substrat revêtu selon la revendication 1, dans lequel le catalyseur est un catalyseur pour cathode.

**15.** Substrat revêtu selon la revendication 1, dans lequel l'électrocatalyseur comprend en outre un liant.

**16.** Substrat revêtu selon la revendication 15, dans lequel le liant est un polymère échangeur d'ions.

**17.** Assemblage de membrane-électrode comprenant un substrat revêtu selon l'une quelconque des revendications 1-16.

**18.** Pile à combustible comprenant un substrat revêtu selon l'une quelconque des revendications 1-16.

**19.** Empilement de piles à combustible comprenant la pile à combustible selon la revendication 18.

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030059666 A
- WO 9942213 A
- WO 9424710 A
- WO 9216027 A
- WO 9913128 A
- US 5547551 A
- US 6110333 A
- US 5525436 A
- US 5716727 A
- US 6025085 A
- US 6099988 A
- US 3282875 A
- US 4358545 A
- US 4940525 A
- EP 376689 A2, Cuchajowski
- US 5484666 A

### Non-patent literature cited in the description

- **GASTEIGER et al.** *J Phys. Chem.,* 1994, vol. 98, 617
- **WATANABE et al.** *J. Electroanal. Chem.,* 1987, 229-395
- **WATANABE et al.** Preparation of Highly Dispersed Pt + Ru Alloy Clusters and the Activity for the Electrooxidation of Methanol. *J. Electroanal. Chem.,* 1987, vol. 229, 395-406
- Binary and ternary anode catalyst formulations including the elements W, Sn and Mo for PEMFCs operated on methanol or reformate gas. *Electrochimica Acta,* 1998, vol. 43 (24), 3637-3644
- Preparation of highly dispersed Pt+Ru alloy clusters and the activity for the electrooxidation of methanol. *J.Electroanal. Chem.,* 1987, vol. 229, 395-406
- CO Electrooxidation on well-characterized Pt-Ru alloys. *J. Phys. chem.,* 1994, vol. 98, 617-625
- **J. IHONEN ; G. LINDBERGH ; A. LUNDBLAD ; G. SUNDHOLM.** *Journal of the Electrochemical Society,* 2002, vol. 149 (4), A448-A454